(19) Europäisches Patentamt
European Patent Office
Office européen des brevets

(11) Veröffentlichungsnummer: **0 264 895 B1**

(12) **EUROPÄISCHE PATENTSCHRIFT**

(45) Veröffentlichungstag der Patentschrift: **15.04.92**

(51) Int. Cl.$^5$: **C08F 10/00**, C08F 4/62

(21) Anmeldenummer: **87115311.0**

(22) Anmeldetag: **20.10.87**

# (54) Verfahren zum Herstellen von Homo- sowie Copolymerisaten des Ethens durch Phillips-Katalysator.

(30) Priorität: **21.10.86 DE 3635710**

(43) Veröffentlichungstag der Anmeldung:
**27.04.88 Patentblatt 88/17**

(45) Bekanntmachung des Hinweises auf die Patenterteilung:
**15.04.92 Patentblatt 92/16**

(84) Benannte Vertragsstaaten:
**AT BE DE FR GB IT NL**

(56) Entgegenhaltungen:
**DE-A- 2 307 147**
**FR-A- 2 303 812**
**US-A- 2 887 471**

(73) Patentinhaber: **BASF Aktiengesellschaft**
**Carl-Bosch-Strasse 38**
**W-6700 Ludwigshafen(DE)**

(72) Erfinder: **Konrad, Rainer, Dr.**
**Gartenweg 7**
**W-6701 Goennheim(DE)**
Erfinder: **Funk, Guido, Dr.**
**Duererstrasse 5**
**W-6520 Worms 1(DE)**
Erfinder: **Schmidt-Thuemmes, Juergen, Dr.**
**Altholzweg 25**
**W-6700 Ludwigshafen(DE)**
Erfinder: **Mueller-Mall, Rudolf, Dr.**
**Ulmenweg 39**
**W-6708 Neuhofen(DE)**
Erfinder: **Schweier, Guenther, Dr.**
**Friedrich-Pietzsch-Strasse 14**
**W-6701 Friedelsheim(DE)**

EP 0 264 895 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung liegt im Rahmen eines Verfahrens zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-alpha-Monoalkenen durch Polymerisation des bzw. der Monomeren bei Temperaturen von 30 bis 150, insbesondere 60 bis 120 °C und Drücken von 2 bis 150, insbesondere von 5 bis 60 bar, durch Phillips-Katalyse mittels

(1) eines Trägerkatalysators aus einem Trägerstoff, der mit oxidisch vorliegendem Chrom, oxidisch vorliegendem Phosphor sowie oxidisch vorliegendem Aluminium beladen ist, und

(2) eines Cokatalysators,

wobei der Trägerkatalysator (1) erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung,

und dann

(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltene Gasstrom 10 bis 1000, insbesondere 60 bis 300 Minuten auf einer Temperatur von 300 bis 900, insbesondere 400 bis 600 °C hält (d.h. "calziniert" bzw. "aktiviert") und so in den eigentlichen Trägerkatalysator (1) überführt.

Polymerisationsverfahren dieser Gattung sind bekannt, wobei im gegebenen Zusammenhang als repräsentativ z.B. die in der GB-PS 2 090 158 und der EP-OS 90 374 beschriebenen gelten können.

Ein charakteristisches Merkmal jener Verfahren ist, daß Trägerkatalysatoren eingesetzt werden, bei deren Herstellung in der ersten Stufe - also zur Gewinnung des Katalysator-Vorprodukts - ein silikatischer Trägerstoff aus einer die entsprechenden Ionen enthaltenden Lösung heraus mit Aluminiumphosphat beladen wird, die Chromkomponente jedoch unabhängig davon eingebracht wird, wosie als Cokatalysator ein Boralkyl verwendet wird.

Als bemerkenswert im gegebenen Zusammenhang kann z.B. auch ein Polymerisationsverfahren einer verwandten aber anderen Gattung gelten, das in der GB-PS 1 537 892 beschrieben ist.

Ein wesentliches Merkmal dieses Verfahrens ist, daß Trägerkatalysatoren eingesetzt werden, bei denen das Katalysatorvorprodukt durch Beladen eines Trägerstoffs mit einer ausgewählten Aluminiumverbindung sowie dem Umsetzungsprodukt einer ausgewählten Phosphorverbindung mit Chromtrioxid erhalten wird, und als Cokatalysator ein Boralkyl dient.

Im gegebenen Zusammenhang sind schließlich noch von Interesse Polymerisationsverfahren einer ebenfalls verwandten aber wiederum anderen Gattung, von denen sich repräsentative Beschreibungen z.B. in den US-PSen 4 290 914 und 4 297 461 finden.

Ein signifikantes Merkmal dieser Verfahren ist, daß Trägerkatalysatoren eingesetzt werden, bei deren Herstellung man den Trägerstoff zunächst mit einer ausgewählten Aluminiumverbindung belädt und das dabei erhaltene Zwischenprodukt einer Hitzebehandlung - d.h. einer Calcination - unterzieht, worauf man das so resultierende Zwischenprodukt mit dem Umsetzungsprodukt einer ausgewählten Phosphorverbindung mit Chromtrioxid belädt und das hierbei gewonnene Produkt wiederum calciniert, sowie daß als Cokatalysatoren bevorzugt ein Boralkyl eingesetzt wird.

Die im vorstehenden abgehandelten Polymerisationsverfahren haben zum Kernstück eine in besonderer Weise ausgestaltete Phillips-Katalyse, namentlich eine solche mit einem Trägerkatalysator, der nicht nur oxidisch vorliegendes Chrom, sondern auch oxidisch vorliegenden Phosphor und oxidisch vorliegendes Aluminium enthält - wobei der Gehalt an letzteren besonders in Kombination mit einer Alkylverbindung als Cokatalysator bewirkt, daß Polymerisate mit variabler Molmassenverteilung und einem erhöhten Schmelzindex erhalten werden, also Polymerisate, die aufgrund ihrer guten Verwertbarkeit für bestimmte Anwendungsgebiete, z.B. das Blasformverfahren, besonders geeignet sind.

Die bekannten Polymerisationsverfahren der in Rede stehenden Art liefern zwar Polymerisate mit variabler Molmassenverteilung und einem erhöhten Schmelzindex, doch ist dieser oftmals nicht wünschenswert groß genug und es wird nur eine unbefriedigende Produktivität, d.h. eine unbefriedigende Ausbeute an Polymerisat pro Gewichtseinheit eingesetztem Trägerkatalysator erreicht.

Hier setzt die Aufgabe an, die zur vorliegenden Erfindung geführt hat: Ein Verfahren der eingangs definierten Art so weiterzubilden, daß es die vorstehend beschriebenen Nachteile nicht oder erheblich vermindertem Maß aufweist.

Es wurde gefunden, daß diese Aufgabe gelöst werden kann, wenn man bei dem in Rede stehenden Polymerisationsverfahren

(1) einen Trägerkatalysator einsetzt, der erhalten worden ist, indem man - jeweils in der Art und nach der Weise spezifisch - (1.1) in einer ersten Stufe (1.1.1) zunächst aus (1.1.1.1) einem feinteiligen silikatischen Trägerstoff und (1.1.1.2) einem inerten organischen Lösungsmittel eine Suspension herstellt, (1.1.2) dann (1.1.2.1) in einem inerten organischen Lösungsmittel (1.1.2.2) eine Chromverbindung der Formel $Cr^{3+}$-(RCO-$CR^1$-COR)$_3^-$ , worin stehen R für eine Alkylgruppe und $R^1$ für eine Alkylgruppe oder Wasserstoff, (1.1.2.3) mit einer Aluminiumverbindung der Formel $AlR^2_3$ , worin $R^2$ steht für eine Alkylgruppe, vereinigt, (1.1.3) hierauf (1.1.3.1) die aus (1.1.1) resultierende Suspension mit (1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe oder für Wasserstoff, mit der Maßgabe, daß mindestens ein R nicht für Wasserstoff steht - und (1.1.3.3) dem aus (1.1.2) erhaltenen Produkt vereinigt, und (1.1.4) schließlich die in (1.1.3) gewonnene Suspension bis zur Trockene eindampft, und dann (1.2) in der zweiten Stufe zunächst (1.2.1) das aus der ersten Stufe (1.1) erhaltene Katalysator-Vorprodukt mit einem Stickstoffstrom behandelt, hierauf (1.2.2) das aus (1.2.1) erhaltene Zwischenprodukt in einem Sauerstoff enthaltenden Gasstrom erhitzt, und schließlich (1.2.3) das aus (1.2.2) erhaltene Zwischenprodukt mit einem Stickstoffstrom behandelt, sowie

(2) als Cokatalysator sowohl ein Lithiumalkyl als auch ein Boralkyl verwendet.

Gegenstand der vorliegenden Erfindung ist dementsprechend ein Verfahren zum Herstellen von Ethen-Homopolymerisaten sowie Ethen-Copolymerisaten mit untergeordneten Mengen an einpolymerisierten $C_3$- bis $C_{12}$-, insbesondere $C_3$- bis $C_8$-alph-Monoalkenen durch Polymerisation des bzw. der Monomeren bei Temperaturen von 30 bis 150, insbesonder 60 bis 120 °C und Drücken von 2 bis 150, insbesondere 5 bis 60 bar, durch Phillips-Katalyse mittels

(1) eines Trägerkatalysators aus einem Trägerstoff, der mit oxidisch vorliegendem Chrom, oxidisch vorliegendem Phosphor sowie oxidisch vorliegendem Aluminium beladen ist, und

(2) eines Cokatalysators,

wobei der Trägerkatalysator (1) erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung

und dann

(1.2) in einer zweiten Stufe das aus der ersten Stufe erhaltene Katalysator-Vorprodukt (1.1) in einem wasserfreien, Sauerstoff in einer Konzentration von über 10 vol.-% enthaltenen Gasstrom 10 bis 1000, insbesondere 60 bis 300 Minuten auf einer Temperatur von 300 bis 900, insbesondere 400 bis 600 °C hält (d.h. "calziniert", bzw. "aktiviert") und so in den eigentlichen Trägerkatalysator (1) überführt.

Das erfindungsgemäße Verfahren ist dadurch gekennzeichnet, daß man

(1) einen Trägerkatalysator einsetzt, der erhalten worden ist, indem man

(1.1) in einer ersten Stufe ein Katalysator-Vorprodukt herstellt, indem man zunächst

(1.1.1) in einer ersten Unterstufe aus

(1.1.1.1) einem feinteiligen, porösen, silikatischen Trägertoff, der einen Teilchendurchmesser von 1 bis 400, vorzugsweise 10 bis 200 µm, ein Porenvolumen von 0,5 bis 3, vorzugsweise 1 bis 2,5 $cm^3$/g sowie eine Oberfläche von 1000, vorzugsweise 200 bis 700 $m^2$/g besitzt, und

(1.1.1.2) einem inerten organischen Lösungsmittel, vorzugsweise einem flüssig vorliegenden aliphatischen, cycloaliphatischen oder aromatischen Kohlenwasserstoff, und insbesondere einem $C_5$- bis $C_7$-Alkan,

unter guter Durchmischung eine Suspension herstellt, mit der Maßgabe, daß auf 100 Gewichtsteile des Trägerstoffs (1.1.1.1) 150 bis 5000, vorzugsweise 200 bis 1000 Gewichtsteile des Lösungsmittels (1.1.1.2) entfallen, dann

(1.1.2) in einer zweiten Unterstufe

(1.1.2.1) in einem Lösungsmittel der unter (1.1.1.2) bezeichneten Art

(1.1.2.2) eine Chromverbindung der Formel

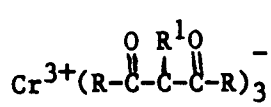 ,

worin stehen

R für eine Alkylgruppe, die nicht mehr als 12, vorzugsweise nicht mehr als 4 Kohlenstoffatome aufweist, insbesondere die Methylgruppe, und

$R^1$ für eine Alkylgruppe, die nicht mehr als 12, vorzugsweise nicht mehr als 4 Kohlenstoffatome aufweist, oder insbesondere für Wasserstoff,

(1.1.2.3) mit einer Aluminiumverbindung der Formel $AlR^2_3$ - worin $R^2$ steht für eine Alkylgruppe, die nicht mehr als 12, vorzugsweise 2 bis 4 Kohlenstoffatome aufweist, insbesondere die iso-Butyl-gruppe -

unter guter Durchmischung bei einter Temperatur von 0 bis 100, vorzugsweise 20 bis 50 °C vereinigt, mit der Maßgabe, daß auf 1 Gewichtsteil Chrom aus der Chromverbindung (1.1.2.2) 0,5 bis 10, vorzugsweise 1 bis 3 Gewichtsteile Aluminium aus der Aluminiumverbindung (1.1.2.3) sowie 5 bis 500, vorzugsweise 50 bis 300 Gewichtsteile Lösungsmittel (1.1.2.1) entfallen, und das Ganze 5 bis 300, vorzugsweise 20 bis 60 Minuten bei der genannten Temperatur hält, hierauf

(1.1.3) in einer dritten Unterstufe

(1.1.3.1) die aus Unterstufe (1.1.1) resultierende Suspension mit

(1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe, die nicht mehr als 12, vorzugsweise nicht mehr als 6 Kohlenstoffatome aufweist oder für Wasserstoff und insbesondere eine $C_2$- bis $C_4$-Alkylgruppe oder Wasserstoff, mit der Maßgabe, daß mindestens ein R nicht für Wasserstoff steht - und

(1.1.3.3) dem aus Unterstufe (1.1.2) erhaltenen Produkt

unter guter Durchmischung bei einer Temperatur von 0 bis 60, vorzugsweise 10 bis 30 °C vereinigt, mit der Maßgabe, daß auf 100 Gewichtsteile des Trägerstoffs (1.1.1.1) 0,1 bis 5, vorzugsweise 0,5 bis 2 Gewichtsteile Chrom aus der Chromverbindung (1.1.2.2) sowie 0,5 bis 10, vorzugsweise 1 bis 3 Gewichtsteile Phosphor aus der Phosphorverbindung (1.1.3.2.) entfallen, und das Ganze 5 bis 300, vorzugsweise 20 bis 60 Minuten bei der genannten Temperatur hält, und schließlich

(1.1.4) in einer vierten Unterstufe die in Unterstufe (1.1.3) gewonnene Suspension bei einer Temperatur von nicht mehr als 150, vorzugsweise nicht mehr als 80 °C - gegebenenfalls unter vermindertem Druck - bis zur Trockene eindampft,

und dann

(1.2) in einer zweiten Stufe das aus der ersten Stufe (1.1) erhaltene Katalysator-Vorprodukt in den eigentlichen Trägerkatalysator überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500, insbesondere 100 bis 300 Minuten auf einer Temperatur von 150 bis 300, insbesondere 200 bis 270 °C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.-% enthaltenen Gasstrom 10 bis 1000, insbesondere 60 bis 300 Minuten auf einer Temperatur von 300 bis 900, insbesondere 500 bis 800 °C hält, und schließlich

(1.2.3) in einer dritten Unterstufe das aus Unterstufe (1.2.2) erhaltene Zwischenprodukt in einem wasserfreien Stickstoffstrom 10 bis 300, insbesondere 30 bis 150 Minuten auf einer Temperatur von 50 bis 400, insbesondere 100 bis 270 °C hält,

sowie

(2) als Cokatalysator einsetzt sowohl ein Lithiumalkyl der Formel $LiR^4$ als auch ein Boralkyl der Formel $BR^5_3$ - worin stehen $R^4$ sowie $R^5$ für eine $C_1$- bis $C_{12}$-, insbesondere eine $C_2$- bis $C_4$-Alkylgruppe und wobei das Molverhältnis Lithiumalkyl : Boralkyl 1: 0,1 bis 1: 10, vorzugsweise 1: 0,2 bis 1: 5 beträgt -,

mit der Maßgabe, daß das Atomverhältnis Chrom im Trägerkatalysator (1): Lithium plus Bor im Cokatalysator (2) größer als 1 : 100 und insbesondere 1 : 1 bis 1 : 20 ist.

Zu dem erfindungsgemäßen Polymerisationsverfahren in seinem Gesamtaspekt ist das Folgende zu sagen:

Das Polymerisationsverfahren als solches kann - unter Beachtung der erfindungsgemäßen Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Phillips - sind aus der Literatur und Praxis wohlbekannt, so daß sich insoweit nähere Ausführungen zu ihnen erübrigen.

Es ist indes hervorzuheben, daß die erfindungsgemäße Arbeitsweise vorzugsweise durchgeführt wird im Rahmen eines Verfahrens zum kontinuierlichen Herstellen partikelförmiger Homopolymerisate oder Copolymerisate durch Polymerisation des bzw. der Monomeren in einem flüssig vorliegenden $C_4$- bis $C_5$-Alkan -

worin sich das zu polymerisierende Monomere bzw. Monomerengemisch in gelöster Form, das gebildete partikelförmige Polymerisat in suspendierter Form befinden - als Reaktionsmedium, - gegebenenfalls - in Gegenwart eines Antistatikums als Wandbelagverhinderungsmittel ("anti-fouling agent") sowie - gegebenenfalls - von Wasserstoff als Molekulargewichtsregler, unter Führen des Reaktionsgemischs als Kreisstrom, welchem die Ausgangsstoffe zugegeben werden und das gebildete partikelförmige Polymerisat entzogen wird. Polymerisationsverfahren dieser Gattung, d.h. Verfahren zum Herstellen von Homo- und Copolymerisaten des Ethylens durch Suspensionspolymerisation des bzw. der Monomeren in einem flüssig vorliegenden Alkan, sind in mannigfachen Ausgestaltungen bekannt; hierzu kann im gegebenen Zusammenhang auf die in den GB-PS 841 263 und 1 435 965 sowie den US-PS 3 242 150 und 4 007 321 beschriebenen Arbeitsweisen, als exemplarischen Beispielen, verwiesen werden.

Weiterhin ist noch zu bemerken, daß der neue Trägerkatalysator (1) - wie entsprechende bekannte Katalysatoren - z.B. außerhalb oder innerhalb des Polymerisationsraumes mit dem Cokatalysator (2) zusammengebracht werden kann; im letztgenannten Fall etwa durch räumlich getrennten Eintrag der Komponenten, die im übrigen in Form einer Suspension (Katalysator) bzw. Lösung (Cokatalysator) gehandhabt werden können.

Schließlich ist noch zu sagen, daß sich das neue Polymerisationsverfahren vornehmlich zum Herstellen solcher Ethen-Homopolymerisate sowie Ethen-Copolymerisate - letztere insbesondere mit Propen, Buten-1, Hexen-1, 4-Methylpenten-1 bzw. Octen-1 - eignet, die einen angehobenen Schmelzindex und eine gezielt variierte Molmassenverteilung haben sollen (also Polymerisaten, wie sie z.B. beim Blasformverfahren bevorzugt Anwendung finden), wobei insbesondere eine gute Produktivität, d.h. eine hohe Ausbeute an Polymerisat pro Gewichtseinheit eingesetztem Trägerkatalysator erzielt wird.

Zu dem erfindungsgemäß einzusetzenden neuen Trägerkatalysator (1) selbst ist das Folgende zu sagen:
Seine Herstellung erfolgt in zwei Stufen, die oben sowie nachstehend mit (1.1) und (1.2) bezeichnet sind.

In der ersten Stufe (1.1) erfolgt die Herstellung des Katalysatorvorprodukts über vier Unterstufen (1.1.1), (1.1.2), (1.1.3) und (1.1.4), deren Durchführung für den Fachmann ohne Schwierigkeiten und ohne weiteres möglich ist. Er wird dabei zweckmäßigerweise mit einer Apparatur arbeiten, die eine dauernde, möglichst homogene Durchmischung der jeweiligen Ansätze unter einer inerten Schutzatmosphäre, wie Stickstoffatmosphäre, erlaubt. Er wird ferner zweckmäßigerweise in den Unterstufen (1.1.2) sowie (1.1.3) in dem Lösungsmittel (1.1.2.1) die Chromverbindung (1.1.2.2) mit der Aluminiumverbindung (1.1.2.3), bzw. die Suspension (1.1.3.1) mit der Phosphorverbindung (1.1.3.2) und dem Produkt (1.1.3.3) nicht schlagartig, sondern eher allmählich umsetzen, z.B. unter Vorlegen der einen und langsames Einbringen der übrigen Komponenten. Schließlich wird er den Eindampfvorgang in Unterstufe (1.1.4) schonend gestalten, - wozu sich z.B. Rotationsverdampfer anbieten.

In der zweiten Stufe (1.2) wird das aus der ersten Stufe (1.1) erhaltene Katalysator-Vorprodukt im Zuge von drei Unterstufen (1.2.1), (1.2.2) und (1.2.3) in den eigentlichen Trägerkatalysator übergeführt. Auch die Durchführung dieser Verfahrensschritte ist für den Fachmann ohne Schwierigkeiten und ohne weiteres möglich. Die hierzu zweckmäßigen Vorrichtungen und Arbeitsmethoden sind die zum "Calzinieren" bzw. "Aktivieren" von Phillips-Trägerkatalysatoren üblichen und an sich wohlbekannten. Dies bedeutet für die zweite Unterstufe (1.2.2), daß Bedingungen zu wählen sind, die gewährleisten, daß im fertigen Trägerkatalysator das Chrom, zumindest teilweise, im sechswertigen Zustand vorliegt; insoweit ist hier also gegenüber dem Stand der Technik keine Besonderheit gegeben. Die erfindungsgemäßen Besonderheiten der zweiten Stufe (1.2) liegen vielmehr in der vorgeschalteten Unterstufe (1.2.1) sowie der nachgeschalteten Unterstufe (1.2.3), ohne die die erfindungsgemäße Zielsetzung nicht zu erreichen ist. Zur letztgenannten Unterstufe (1.2.3) ist zu bemerken, daß sie - nicht nötigerweise, aber aus ökonomischen Gründen - zweckmäßigerweise mit einem Abkühlvorgang im Bereich der angegebenen kritischen Zeit- und Temperaturspanne verbunden wird.

Die stoffliche Seite des neuen Trägerkatalysators (1) betreffend ist zu sagen, daß bei seiner Herstellung - generell - die Anwesenheit von Wasser soweit wie möglich ausgeschlossen werden sollte. Dies beginnt beim Trägerstoff (1.1.1.1), den man vor seinem Einsatz - wie einschlägig üblich - scharf trocknen sollte, z.B. für 8 Stunden bei einer Temperatur von 140 ° C unter einem Druck von 20 Torr. Das gleichfalls einzusetzende inerte organische Lösungsmittel (1.1.1.2) - hier eignen sich vor allem $C_5$- bis $C_7$-Alkane, wie insbesondere n-Heptan, sowie ferner z.B. Pentane, Hexane, incl. Cyclohexan - sollte möglichst weniger als 0,1 Gew.-% Wasser enthalten. Die Chromverbindung (1.1.2.2) - hier ist Chrom(III)--acetonylacetonat zu bevorzugen - enthält wie die Aluminiumverbindung (1.1.2.3) - hier ist besonders geeignet Triisobutylaluminium, geeignet aber auch z.B. Tri-n-butyl-, Tri-n-propyl-, Triisopropyl- sowie Triethylaluminium - Wasser von Natur aus nur in unbedeutenden Mengen. Als einzusetzende Phosphorverbindung (1.1.3.2), die ebenfalls maximal 1 Gew.-% Wasser enthalten sollte, eignen sich vor allem Diethylphosphit, Dibutylphosphit, Diethylphosphat, Di-n-butylphosphat sowie Triethylphosphat, aber auch z.B. Dimethylphosphit, Diisopropylphosphit, Diphenylphosphit, Diphenylphosphat, Trimethylphosphat sowie Triphenylphosphat sind geeignet.

Bei dem erfindungsgemäßen Polymerisationsverfahren ist nicht nur ein Trägerkatalysator (1) einzusetzen, sondern auch ein Cokatalysator (2) in Gestalt sowohl eines bestimmten Lithiumalkyls als auch eines bestimmten Boralkyls. Namentliche Beispiele für hier besonders geeignete Lithiumalkyle sind n-Butyllithium, sec.-Butyllithium sowie tert.-Butyllithium, für hervorzuhebende Boralkyle Triethylbor sowie Tri-n-butylbor.

Beispiel

Herstellen des Trägerkatalysators (1)

(1.1) In einer ersten Stufe wird ein Katalysator-Vorprodukt hergestellt, indem man zunächst
(1.1.1.) in einer ersten Unterstufe aus
(1.1.1.1) einem feinteiligen, porösen, silikatischen Trägerstoff, der einen Teilchendurchmesser von 50 bis 150µm, ein Porenvolumen von 1,75 $cm^3$/g sowie eine Oberfläche von 320 $m^2$/g besitzt (8 Stunden bei 140°C und 20 Torr getrocknet), und
(1.1.1.2) wasserfreiem n-Heptan
unter Argonatmosphäre sowie guter Durchmischung mittels Rühren eine Suspension herstellt, mit der Maßgabe, daß auf 100 Gewichtsteile des Trägerstoffs (1.1.1.1) 400 Gewichtsteile des organischen Lösungsmittels (1.1.1.2) entfallen, dann
(1.1.2) in einer zweiten Unterstufe
(1.1.2.1) in dem Lösungsmittel der unter (1.1.1.2) bezeichneten Art
(1.1.2.2) Chrom(III)-acetonylacetonat,
(1.1.2.3) mit Triisobutylaluminium
unter guter Durchmischung durch Rühren bei einer Temperatur von 40°C vereinigt mit der Maßgabe, daß auf 1 Gewichtsteil Chrom aus (1.1.2.2) 2 Gewichtsteile Aluminium aus (1.1.2.3) sowie 100 Gewichtsteile des Lösungsmittels (1.1.2.1) entfallen, und das Ganze 15 Minuten bei der genannten Temperatur hält, hierauf
(1.1.3) in einer dritten Unterstufe
(1.1.3.1) die aus Unterstufe (1.1.1) resultierende Suspension mit
(1.1.3.2) - zunächst - Triethylphosphat und
(1.1.3.3) - anschließend - dem aus Unterstufe (1.1.2) erhaltenen Produkt
unter guter Durchmischung mittels Rühren bei einer Temperatur von 20°C vereinigt, mit der Maßgabe, daß auf 100 Gewichtsteile des Trägerstoffs (1.1.1.1) 1 Gewichtsteil Chrom aus der Chromverbindung (1.1.2.2) sowie 2 Gewichtsteile Phosphor aus der Phosphorverbindung (1.1.3.2) entfallen, und das Ganze 30 Minuten bei der genannten Temperatur hält, und schließlich
(1.1.4) in einer vierten Unterstufe die in Unterstufe (1.1.3) gewonnene Suspension bei einer Temperatur von bis zu 80°C unter vermindertem Druck (bis zu 20 Torr) in einem Rotationsverdampfer bis zur Trockene eindampft.
(1.2) In einer zweiten Stufe wird das aus der ersten Stufe (1.1) erhaltene Katalysator-Vorprodukt in den eigentlichen Trägerkatalysator überführt, indem man - jeweils mittels eines Fließbettes - zunächst -
(1.2.1) in einer ersten Unterstufe das aus der ersten Stufe (1.1) erhaltene Katalysator-Vorprodukt in einem wasserfreien Stickstoffstrom 120 Minuten auf einer Temperatur von 200°C hält, hierauf
(1.2.2) in einer zweiten Unterstufe das aus Unterstufe (1.2.1) erhaltene Zwischenprodukt in einem wasserfreien Luftstrom 120 Minuten auf einer Temperatur von 600°C hält, und schließlich
(1.2.3) in einer dritten Unterstufe das aus Unterstufe (1.2.2) erhaltene Zwischenprodukt in einem wasserfreien Stickstoffstrom 60 Minuten auf einer von 250 auf 100°C sinkenden Temperatur hält.

Polymerisation mittels des Trägerkatalysators (1) sowie des Cokatalysators (2)

Ein Stahlautoklav mit 1 Liter Nutzvolumen und mit Rührer wird auf 95°C erhitzt und 10 Minuten mit trockenem Stickstoff gespült. Danach wird 1 ml einer sowohl 10 g n-Butyllithium als auch 15 g Triethylbor als Cokatalysator (2) pro 1 n-Heptan enthaltenden Lösung und 500 ml Isobutan in den Reaktor eingeführt. Durch Zufuhr von Ethen wird dann der Druck auf 40 bar erhöht und nach Einbringen von 80 mg des Trägerkatalysators (1) mit Hilfe einer Schleuse - entsprechend einem Atomverhältnis Chrom im Trägerkatalysator : Lithium plus Bor in Cokatalysator von 1 : 5 - während der Polymerisation aufrechterhalten. Nach 60 Minuten bei einer Polymerisationstemperatur von 95 ± 2°C wird der Autoklav unter Verdampfen des Isobutens und des nicht umgesetzten Ethens entspannt und das erhaltene Polymerisat entnommen.

Nähere Angaben zu dem so erhaltenen Verfahrensprodukt finden sich in der unten stehenden Tabelle.

Vergleichsversuch 1

Herstellen des Trägerkatalysators

100 g des im Beispiel beschriebenen Trägerstoffs werden in 500 g Wasser suspendiert und unter guter Durchmischung bei 20 °C mit einer 2 g Phosphor sowie 2 g Aluminium entsprechenden Menge $H_3PO_4$ bzw. Aluminiumnitrat versetzt. Nach weiterer Zugabe einer 1 g Chrom enthaltenden Menge Chromnitrat wird die Suspension bei der oben genannten Temperatur für weitere 30 Minuten durchmischt und schließlich analog zum Beispiel zur Trockene eingedampft.

Das erhaltene Katalysatorvorprodukt wird im trockenen Luftstrom 120 Minuten auf einer Temperatur von 600 °C gehalten.

Polymerisation

Es wird in Identität zum Beispiel gearbeitet, mit den Ausnahmen, daß
(i) der vorstehend beschriebene Trägerkatalysator in gleicher Menge eingesetzt wird und
(ii) die Mitverwendung von n-Butyllithium entfällt.

Nähere Angaben zu dem hierbei erhaltenen Verfahrensprodukt finden sich ebenfalls in der Tabelle.

Vergleichsversuch 2

Herstellen des Trägerkatalysators

100 g des im Beispiel beschriebenen Trägerstoffs werden in 400 g trockenem Dichlormethan unter Argonatmosphäre suspendiert. Unter guter Durchmischung wird bei 20 °C ein 1 g Chrom enthaltendes Umsetzungsprodukt zugegeben, das erhalten wurde aus einer entsprechenden Menge Chromtrioxid unter Hinzufügen einer stöchiometrischen Menge Triethylphosphat bei guter Durchmischung in 100 g Dichlormethan. Nach weiterer Zugabe einer 2 g Aluminium entsprechenden Menge Tri-sec.-butylaluminium und Durchmischung für 30 Minuten bei 20 °C wird die erhaltene Suspension analog zum Beispiel zur Trockene eingedampft.

Das so gewonnene Katalysatorvorprodukt wird im trockenen Luftstrom 120 Minuten auf einer Temperatur von 600 °C gehalten.

Polymerisation

Es wird in Identität zum Beispiel gearbeitet, mit den Ausnahmen, daß
(i) der vorstehend beschriebene Trägerkatalysator in gleicher Menge eingesetzt wird und
(ii) die Mitverwendung von n-Butyllithium entfällt.

Nähere Angaben zu dem hierbei erhaltenen Verfahrensprodukt finden sich ebenfalls in der Tabelle.

Vergleichsversuch 3

Herstellung des Trägerkatalysators

100 g des im Beispiel beschriebenen Trägerstoffs werden in 400 g wasserfreiem Dichlormethan suspendiert. Unter guter Durchmischung wird bei 20 °C eine 2 g Aluminium entsprechende Menge Tri-sec.-butylaluminium zugegeben und die dabei erhaltene Suspension wie im Beispiel beschrieben zur Trockene eingedampft.

Das so erhaltene Zwischenprodukt wird im trockenen Luftstrom 120 Minuten auf einer Temperatur von 600 °C gehalten.

Nach erneuter Suspension in 400 g Dichlormethan wird unter guter Durchmischung bei 20 °C eine 1 g Chrom enthaltende Menge des in Vergleichsversuch 2 beschriebenen Umsetzungsproduktes von Chromtrioxid mit Triethylphosphat hinzugefügt und wiederum in Rotationsverdampfer bis zur Trockene eingedampft.

Das so gewonne Katalysatorvorprodukt wird im trockenen Luftstrom 120 Minuten auf einer Temperatur von 850 °C gehalten.

Polymerisation

Es wird in Identität zum Beispiel gearbeitet, mit den Ausnahmen, daß
(i) der vorstehend beschriebene Trägerkatalysator in gleicher Menge eingesetzt wird und
(ii) die Mitverwendung von n-Butyllithium entfällt.
Nähere Angaben zu dem dabei erhaltenen Verfahrensprodukt sind wiederum der folgenden Tabelle zu entnehmen.

Tabelle

| | Produktivität [a] (gPE/gKat.) | HLMI [b] (g/10 Min.) |
|---|---|---|
| Beispiel | 4500 | 27,1 |
| Vergleichs-versuch 1 | 1800 | 5,7 |
| Vergleichs-versuch 2 | 1400 | 7,5 |
| Vergleichs-versuch 3 | 1600 | 22,6 |

[a] Gramm Polymerisat pro Gramm Trägerkatalysator (1).
[b] Nach DIN 53 735 bei 190 ° C/21,6 Kp.

Die in den Vergleichsversuchen erhaltenen Verfahrensprodukte besitzen bei einer deutlich niedrigeren Produktivität einen kleineren Schmelzindex als das erfindungsgemäß hergestellte Verfahrensprodukt.

**Patentansprüche**

**1.** Verfahren zum Herstellen von Ethen Homopolymerisaten sowie Ethen-Copolymerisaten mit untergeordneten Mengen an einpolymerisierten $C_3$- bis $C_{12}$-alpha-Monoalkenen durch Polymerisation des bzw. der Monomeren bei Temperaturen von 30 bis 150 ° C und Drücken von 2 bis 150 bar, durch Phillips-Katalyse mittels
(1) eines Trägerkatalysators aus einem Trägerstoff, der mit oxidisch vorliegendem Chrom, oxidisch vorliegendem Phosphor sowie oxidisch vorliegendem Aluminium beladen ist, und
(2) eines Cokatalysators,
wobei der Trägerkatalysator (1) erhalten worden ist, indem man
(1.1) in einer ersten Stufe ein mit den gewünschten Mengen Chrom, Phosphor sowie Aluminium beladenes Katalysator-Vorprodukt (1.1) herstellt aus
(1.1.a) einem feinteiligen, porösen, silikatischen Trägerstoff,
(1.1.b) einer ausgewählten, spezifischen Chromverbindung,
(1.1.c) einer ausgewählten, spezifischen Phosphorverbindung sowie
(1.1.d) einer ausgewählten, spezifischen Aluminiumverbindung,
und dann
(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltene Gasstrom 10 bis 1000 Minuten auf einer Temperatur von 300 bis 900 ° C hält und so in den eigentlichen Trägerkatalysator (1) überführt,
dadurch gekennzeichnet, daß man
(1) einen Trägerkatalysator einsetzt, der erhalten worden ist, indem man
(1.1) in einer ersten Stufe ein Katalysator-Vorprodukt herstellt, indem man zunächst
(1.1.1.) in einer ersten Unterstufe aus
(1.1.1.1) einem feinteiligen, porösen, silikatischen Trägerstoff, der einen Teilchendurchmesser von 1 bis 400 $\mu$m, ein Porenvolumen von 0,5 bis 3 $cm^3/g$ sowie eine Oberfläche von 100 bis 1000 $m^2/g$ besitzt, und
(1.1.1.2) einem inerten organischen Lösungsmittel
unter guter Durchmischung eine Suspension herstellt, mit der Maßgabe, daß auf 100 Gewichtsteile des Trägerstoffs (1.1.1.1) 150 bis 5000 Gewichtsteile des Lösungsmittels (1.1.1.2) entfallen, dann
(1.1.2) in einer zweiten Unterstufe
(1.1.2.1) in einem Lösungsmittel der unter (1.1.1.2) bezeichneten Art
(1.1.2.2) eine Chromverbindung der Formel

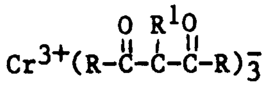 ,

worin stehen

R für eine Alkylgruppe, die nicht mehr als 12 Kohlenstoffatome aufweist, und

$R^1$ für eine Alkylgruppe, die nicht mehr als 12 Kohlenstoffatome aufweist, oder für Wasserstoff,

(1.1.2.3) mit einer Aluminiumverbindung der Formel $AlR^2_3$ - worin $R^2$ steht für eine Alkylgruppe, die nicht mehr als 12 Kohlenstoffatome aufweist -, unter guter Durchmischung bei einer Temperatur von 0 bis 100 °C vereinigt, mit der Maßgabe, daß auf 1 Gewichtsteil Chrom aus der Chromverbindung (1.1.2.2) 0,5 bis 10 Gewichtsteile Aluminium aus der Aluminiumverbindung (1.1.2.3) sowie 5 bis 500 Gewichtsteile Lösungsmittel (1.1.2.1) entfallen, und das Ganze 5 bis 300 Minuten bei der genannten Temperatur hält, hierauf

(1.1.3) in einer dritten Unterstufe

(1.1.3.1) die aus Unterstufe (1.1.1) resultierende Suspension mit

(1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe, die nicht mehr als 12 Kohlenstoffatome aufweist oder für Wasserstoff, mit der Maßgabe, daß mindestens ein R nicht für Wasserstoff steht - und

(1.1.3.3) dem aus Unterstufe (1.1.2) erhaltenen Produkt

unter guter Durchmischung bei einer Temperatur von 0 bis 60 °C vereinigt, mit der Maßgabe, daß auf 100 Gewichtsteile des Trägerstoffs (1.1.1.1) 0,1 bis 5 Gewichtsteile Chrom aus der Chromverbindung (1.1.2.2) sowie 0,5 bis 10 Gewichtsteile Phosphor aus der Phosphorverbindung (1.1.3.2) entfallen, und das Ganze 5 bis 300 Minuten bei der genannten Temperatur hält, und schließlich

(1.1.4) in einer vierten Unterstufe die in Unterstufe (1.1.3) gewonnene Suspension bei einer Temperatur von nicht mehr als 150 °C - gegebenenfalls unter vermindertem Druck - bis zur Trockene eindampft,

und dann

(1.2) in einer zweiten Stufe das aus der ersten Stufe (1.1) erhaltene Katalysator-Vorprodukt in den eigentlichen Trägerkatalysator überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500 Minuten auf einer Temperatur von 150 bis 300 °C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.-% enthaltenen Gasstrom 10 bis 1000 Minuten auf einer Temperatur von 300 bis 900 °C hält, und schließlich

(1.2.3) in einer dritten Unterstufe das aus Unterstufe (1.2.2) erhaltene Zwischenprodukt in einem wasserfreien Stickstoffstrom 10 bis 300 Minuten auf einer Temperatur von 50 bis 400 °C hält,

sowie

(2) als Cokatalysator einsetzt sowohl ein Lithiumalkyl der Formel $LiR^4$ als auch ein Boralkyl der Formel $BR^5_3$ - worin stehen $R^4$ sowie $R^5$ für eine $C_1$- bis $C_{12}$-Alkylgruppe, und wobei das Molverhältnis Lithiumalkyl : Boralkyl 1 : 0,1 bis 1 : 10 beträgt -,

mit der Maßgabe, daß das Atomverhältnis Chrom im Trägerkatalysator (1) : Lithium plus Bor im Cokatalysator (2) größer als 1 : 100 ist.

**2.** Trägerkatalysator (1) für die Phillips-Katalyse aus einem Trägerstoff, der mit oxidisch vorliegendem Chrom, oxidisch vorliegendem Phosphor sowie oxidisch vorliegendem Aluminium beladen ist, und der erhalten worden ist, indem man

(1.1) in einer ersten Stufe ein mit den gewünschten Mengen Chrom, Phosphor sowie Aluminium beladenes Katalysator-Vorprodukt (1.1) herstellt aus

(1.1.a) einem feinteiligen, porösen, silikatischen Trägerstoff,

(1.1.b) einer ausgewählten, spezifischen Chromverbindung,

(1.1.c) einer ausgewählten, spezifischen Phosphorverbindung sowie

(1.1.d) einer ausgewählten, spezifischen Aluminiumverbindung,

und dann

(1.2) in einer zweiten Stufe das aus der ersten Stufe erhaltene Katalysator-Vorprodukt (1.1) in einem wasserfreien, Sauerstoff in einer Konzentration von über 10 Vol.-% enthaltene Gasstrom 10 bis 1000

Minuten auf einer Temperatur von 300 bis 900°C hält und so in den eigentlichen Trägerkatalysator (1) überführt,

dadurch gekennzeichnet, daß der Trägerkatalysator erhalten worden ist, indem man

(1.1) in einer ersten Stufe ein Katalysator-Vorprodukt herstellt, indem man zunächst

(1.1.1) in einer ersten Unterstufe aus

(1.1.1.1) einem feinteiligen, porösen, silikatischen Trägerstoff, der einen Teilchendurchmesser von 1 bis 400 µm, ein Porenvolumen von 0,5 bis 3 $cm^3/g$ sowie eine Oberfläche von 100 bis 1000 $m^2/g$ besitzt, und

(1.1.1.2) einem inerten organischen Lösungsmittel

unter guter Durchmischung eine Suspension herstellt, mit der Maßgabe, daß auf 100 Gewichtsteile des Trägerstoffs (1.1.1.1) 150 bis 5000 Gewichtsteile des Lösungsmittels (1.1.1.2) entfallen, dann

(1.1.2) in einer zweiten Unterstufe aus

(1.1.2.1) in einem Lösungsmittel der unter (1.1.1.2) bezeichneten Art

(1.1.2.2) eine Chromverbindung der Formel

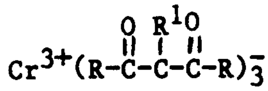

,

worin stehen

R für Alkylgruppe, die nicht mehr als 12 Kohlenstoffatome aufweist, und

$R^1$ für eine Alkylgruppe, die nicht mehr als 12 Kohlenstoffatome aufweist, oder für Wasserstoff,

(1.1.2.3) mit einer Aluminiumverbindung der Formel $AlR^2_3$ - worin $R^2$ steht für eine Alkylgruppe, die nicht mehr als 12 Kohlenstoffatome aufweist -, unter guter Durchmischung bei einer Temperatur von 0 bis 100°C vereinigt, mit der Maßgabe, daß auf 1 Gewichtsteil Chrom aus der Chromverbindung (1.1.2.2) 0,5 bis 10 Gewichtsteile Aluminium aus der Aluminiumverbindung (1.1.2.3) sowie 5 bis 500 Gewichtsteile Lösungsmittel (1.1.2.1) entfallen, und das Ganze 5 bis 300 Minuten bei der genannten Temperatur hält, hierauf

(1.1.3) in einer dritten Unterstufe

(1.1.3.1) die aus Unterstufe (1.1.1) resultierende Suspension mit

(1.1.3.2) einer Phosphorverbindung der Formel $P(O)(OR^3)_3$ oder $P(O)H(OR^3)_2$ - worin $R^3$ steht für eine Alkyl-, Aryl- oder Cycloalkylgruppe, die nicht mehr als 12 Kohlenstoffatome aufweist oder für Wasserstoff, mit der Maßgabe, daß mindestens ein R nicht für Wasserstoff steht - und

(1.1.3.3) dem aus Unterstufe (1.1.2) erhaltenen Produkt

unter guter Durchmischung bei einer Temperatur von 0 bis 60°C vereinigt, mit der Maßgabe, daß auf 100 Gewichtsteile des Trägerstoffs (1.1.1.1) 0,1 bis 5 Gewichtsteile Chrom aus der Chromverbindung (1.1.2.2) sowie 0,5 bis 10 Gewichtsteile Phosphor aus der Phosphorverbindung (1.1.3.2) entfallen, und das Ganze 5 bis 300 Minuten bei der genannten Temperatur hält, und schließlich

(1.1.4) in einer vierten Unterstufe die in Unterstufe (1.1.3) gewonnene Suspension bei einer Temperatur von nicht mehr als 150°C - gegebenenfalls unter vermindertem Druck - bis zur Trockene eindampft,

und dann

(1.2) in einer zweiten Stufe das aus der ersten Stufe (1.1) erhaltene Katalysator-Vorprodukt in den eigentlichen Trägerkatalysator überführt, indem man zunächst

(1.2.1) in einer ersten Unterstufe das aus der ersten Stufe (1.1) erhaltene Katalysator-Vorprodukt in einem wasserfreien Stickstoffstrom 60 bis 500 Minuten auf einer Temperatur von 150 bis 300°C hält, hierauf

(1.2.2) in einer zweiten Unterstufe das aus Unterstufe (1.2.1) erhaltene Zwischenprodukt in einem wasserfreien, Sauerstoff in einer Konzentration von über 10 Vol.-% enthaltenen Gasstrom 10 bis 1000 Minuten auf einer Temperatur von 300 bis 900°C hält, und schließlich

(1.2.3) in einer dritten Unterstufe das aus Unterstufe (1.2.2) erhaltene Zwischenprodukt in einem wasserfreien Stickstoffstrom 10 bis 300 Minuten auf einer Temperatur von 50 bis 400°C hält.

## Claims

**1.** A process for the preparation of ethene homopolymers and ethene copolymers with minor amounts of

copolymerized $C_3$-$C_{12}$-alpha-monoalkenes, by polymerization of the monomer or monomers at from 30 to 150 ° C, and under from 2 to 150 bar by Phillips catalysis using

(1) a supported catalyst consisting of a carrier which is laden with chromium in oxide form, phosphorus in oxide form and aluminum in oxide form, and

(2) a cocatalyst, the supported catalyst (1) being obtained by a method in which

(1.1) in a first stage, a catalyst intermediate (1.1) laden with the desired amounts of chromium, phosphorus and aluminum is prepared from

(1.1.a) a finely divided, porous silicate carrier,

(1.1.b) a selected, specific chromium compound,

(1.1.c) a selected, specific phosphorus compound and

(1.1.d) a selected, specific aluminum compound,

and then

(1.2) in a second stage, the catalyst intermediate (1.1) obtained from the first stage is kept in an anhydrous gas stream containing oxygen in a concentration of more than 10% by volume for from 10 to 1000 minutes at from 300 to 900 ° C, and thus converted to the actual supported catalyst (1), wherein

(1) the supported catalyst used is obtained by a method in which

(1.1) in a first stage, a catalyst intermediate is prepared by a method in which first,

(1.1.1) in a first substage, a suspension is prepared from

(1.1.1.1) a finely divided, porous silicate carrier which has a particle diameter of from 1 to 400 µm, a pore volume of from 0.5 to 3 $cm^3$/g and a surface area of from 100 to 1000 $m^2$/g, and (1.1.1.2) an inert organic solvent, with thorough mixing, and with the proviso that from 150 to 5000 parts by weight of the solvent (1.1.1.2) are employed per 100 parts by weight of the carrier (1.1.1.1), then

(1.1.2) in a second substage,

(1.1.2.1) in a solvent of the type defined under (1.1.1.2)

(1.1.2.2) a chromium compound of the formula

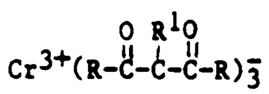 ,

where R is alkyl of not more than 12 carbon atoms and $R^1$ is alkyl of not more than 12 carbon atoms, or hydrogen, is combined with (1.1.2.3) an aluminum compound of the formula $ALR^2$, where $R^2$ is alkyl of not more than 12 carbon atoms with through mixing, at from 0 to 100 ° C, with the proviso that there are from 0.5 to 10 parts by weight of aluminum from the aluminum compound (1.1.2.3) and from 5 to 500 parts by weight of solvent (1.1.2.1) per part by weight of chromium from the chromium compound (1.1.2.2), and the entire mixture is kept at the stated temperature for from 5 to 300 minutes, then

(1.1.3) in a third substage,

(1.1.3.1) the suspension resulting from substage (1.1.1) is combined with

(1.1.3.2) a phosphorus compound of the formula $P(O)(OR^3)_3$ or $P(O)H(OR^3)_2$, where $R^3$ is alkyl, aryl or cycloalkyl of not more than 12 carbon atoms, or hydrogen, with the proviso that one or more radicals R are not hydrogen, and

(1.1.3.3) the product obtained from substage (1.1.2), with thorough mixing at from 0 to 60 ° C, with the proviso that from 0.1 to 5 parts by weight of chromium from the chromium compound (1.1.2.2) and from 0.5 to 10 parts by weight of phosphorus from the phosphorus compound (1.1.3.2) are employed per 100 parts by weight of the carrier (1.1.1.1), and the entire mixture is kept at the stated temperature for from 5 to 300 minutes, and finally

(1.1.4) in a fourth substage, the suspension obtained in substage (1.1.3) is evaporated to dryness at no higher than 150 ° C, under atmospheric or reduced pressure, and then

(1.2) in a second stage, the catalyst intermediate obtained from the first stage (1.1) is converted to the actual supported catalyst by a method in which first,

(1.2.1) in a first substage, the catalyst intermediate obtained from the first stage (1.1) is kept in a stream of anhydrous nitrogen, at from 150 to 300 ° C for from 60 to 500 minutes, then

(1.2.2) in a second substage, the intermediate obtained from substage (1.2.1) is kept in an anhydrous gas stream containing oxygen in a concentration of more than 10% by volume for from 10 to 1000 minutes at from 300 to 900 ° C and finally,

(1.2.3) in a third substage, the intermediate obtained from substage (1.2.2) is kept in a stream of anhydrous nitrogen for from 10 to 300 minutes at from 50 to 400 ° C and

(2) both a lithiumalkyl of the formula $LiR^4$ and a boronalkyl of the formula $BR^{5}{}_3$ where $R^4$ and $R^5$ are each $C_1$-$C_{12}$-alkyl are used as the cocatalyst, the molar ratio of lithiumalkyl to boronalkyl being from 1:0.1 to 1:10,

with the proviso that the atomic ratio of chromium in the supported catalyst (1) to lithium plus boron in the cocatalyst (2) is greater than 1:100.

**2.** A supported catalyst (1) for Phillips catalysis, consisting of a carrier which is laden with chromium in oxide form, phosphorus in oxide form and aluminum in oxide form and is obtained by a method in which

(1.1) in a first stage, a catalyst intermediate (1.1) laden with the desired amounts of chromium, phosphorus and aluminum is prepared from

(1.1.a) a finely divided, porous silicate carrier,

(1.1b) a selected, specific chromium compound,

(1.1.c) a selected, specific phosphorus compound and

(1.1.d) a selected, specific aluminum compound,

and then

(1.2) in a second stage, the catalyst intermediate (1.1) obtained from the first stage is kept in an anhydrous gas stream containing oxygen in a concentration of more than 10% by volume for from 10 to 1000 minutes at from 300 to 900 ° C, and thus converted to the actual supported catalyst (1),

wherein the supported catalyst intermediate is obtained by a method in which

(1.1) in a first stage, a catalyst intermediate is prepared by a method in which first,

(1.1.1) in a first substage, a suspension is prepared from

(1.1.1.1) a finely divided, porous silicate carrier which has a particle diameter of from 1 to 400 µm, a pore volume of from 0.5 to 3 $cm^3/g$ and a surface area of from 100 to 1000 $m^2/g$, and

(1.1.1.2) an inert organic solvent,

with thorough mixing, and with the proviso that from 150 to 5000 parts by weight of the solvent (1.1.1.2) are employed per 100 parts by weight of the carrier (1.1.1.1), then

(1.1.2) in a second substage,

(1.1.2.1) in a solvent of the type defined under (1.1.1.2)

(1.1.2.2) a chromium compound of the formula

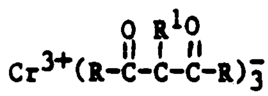

,

where R is alkyl of not more than 12 carbon atoms and $R^1$ is alkyl of not more than 12 carbon atoms, or hydrogen, is combined with

(1.1.2.3) an aluminum compound of the formula $ALR^{23}$, where $R^2$ is alkyl of not more than 12 carbon atoms, with thorough mixing, at from 0 to 100 ° C, with the proviso that there are from 0.5 to 10 parts by weight of aluminum from the aluminum compound (1.1.2.3) and from 5 to 500 parts by weight of solvent (1.1.2.1) per part by weight of chromium from the chromium compound (1.1.2.2), and the entire mixture is kept at the stated temperature for from 5 to 300 minutes, then

(1.1.3) in a third substage,

(1.1.3.1) the suspension resulting from substage (1.1.1) is combined with

(1.1.3.2) a phosphorus compound of the formula $P(O)(OR^3)_3$ or $P(O)H(OR^3)_2$, where $R^3$ is alkyl, aryl or cycloalkyl of not more than 12 carbon atoms, or hydrogen, with the proviso that one or more radicals R are not hydrogen, and

(1.1.3.3) the product obtained from substage (1.1.2), with thorough mixing at from 0 to 60 ° C, with the proviso that from 0.1 to 5 parts by weight of chromium from the chromium compound (1.1.2.2) and from 0.5 to 10 parts by weight of phosphorus from the phosphorus compound (1.1.3.2) are employed per 100 parts by weight of the carrier (1.1.1.1), and the entire mixture is kept at the stated temperature for from 5 to 300 minutes, and finally

(1.1.4) in a fourth substage, the suspension obtained in substage (1.1.3) is evaporated to dryness at no higher than 150 ° C, under atmospheric or reduced pressure,

and then

(1.2) in a second stage, the catalyst intermediate obtained from the first stage (1.1) is converted to the actual supported catalyst by a method in which first,

(1.2.1) in a first substage, the catalyst intermediate obtained from the first stage (1.1) is kept in a stream of anhydrous nitrogen, at from 150 to 300 ° C for from 60 to 500 minutes, then

(1.2.2) in a second substage, the intermediate obtained from substage (1.2.1) is kept in an anhydrous gas stream containing oxygen in a concentration of more than 10% by volume for from 10 to 1000 minutes at from 300 to 900 ° c, and finally,

(1.2.3) in a third substage, the intermediate obtained from substage (1.2.2) is kept in a stream of anhydrous nitrogen for from 10 to 300 minutes at from 50 to 400 ° C.

## Revendications

**1.** Procédé pour la préparation d'homopolymères d'éthyléne, ainsi que de copolymères d'éthylène avec des quantités mineures d'$\alpha$-monoalcènes en $C_3$ à $c_{12}$ en liaison polymère, par polymérisation du ou des monomères à des températures de 30 à 150 ° C et sous des pressions de 2 à 150 bar, par catalyse de Phillips au moyen

(1) d'un catalyseur sur support, se composant d'une matière de support qui est chargée de chrome présent sous forme oxydée, de phosphore présent sous forme oxydée et d'aluminium présent sous forme oxydée, et

(2) d'un co-catalyseur,

le catalyseur sur support (1) ayant été obtenu

(1.1) en préparant, dans une première étape, un progéniteur de catalyseur (1.1) chargé des quantités désirées de chrome, de phosphore et d'aluminium, à partir

(1.1.a) d'une matière de support du type silicate, poreuse et finement divisée,

(1.1.b) d'un composé du chrome spécifique sélectionné,

(1.1.c) d'un composé du phosphore spécifique sélectionné et

(1.1.d) d'un composé de l'aluminium spécifique sélectionné,

puis

(1.2) en maintenant, dans une seconde étape, le progéniteur de catalyseur (1.1) obtenu dans la première étape dans un courant de gaz anhydre contenant de l'oxygène en une concentration de plus de 10% en volume, pendant 10 à 1000 mn à une température de 300 à 900 ° C, et en le transformant ainsi en le catalyseur sur support (1) proprement dit,

caractérisé en ce que

(1) on utilise un catalyseur sur support qui a été obtenu

(1.1) en préparant, dans une première étape, un progéniteur de catalyseur par un procédé consistant tout d'abord,

(1.1.1) à préparer sous bon mélange, dans une première sous-étape, une suspension

(1.1.1.1) à partir d'une matière de support du type silicate, poreuse et finement divisée, qui a un diamètre de particules de 1 à 400 $\mu$m, un volume de pores de 0,5 à 3 $cm^3/g$ et une surface de 100 à 1000 $M^2/g$, et

(1.1.1.2) à partir d'un solvant organique inerte,

étant spécifié que 150 à 5000 parties en poids du solvant (1.1.1.2) sont utilisées pour 100 parties en poids de la matière de support (1.1.1.1), puis

(1.1.2) dans une deuxième sous-étape, à combiner sous bon mélange à une température de 0 à 100 ° C,

(1.1.2.1) dans un solvant de la nature indiquée en (1.1.1.2),

(1.1.2.2) un composé du chrome de formule

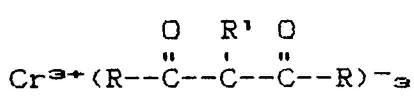

dans laquelle

R est mis pour un groupement alkyle qui ne renferme pas plus de 12 atomes de carbone, et

$R^1$ est mis pour un groupement alkyle qui ne renferme pas plus de 12 atomes de carbone ou pour un atome d'hydrogène,

(1.1.2.3) avec un composé de l'aluminium de formule $AIR^2_3$ - dans laquelle $R^2$ est mis pour un

groupement alkyle qui ne renferme pas plus de 12 atomes de carbone-, étant spécifié que 0,5 à 10 parties en poids d'aluminium provenant du composé d'aluminium (1.1.2.3) et 5 à 500 parties en poids de solvant (1.1.2.1) sont utilisées pour 1 partie en poids de chrome provenant du composé du chrome (1.1.2.2),

et à maintenir le tout pendant 5 à 300 mn à la température mentionnée, puis

(1.1.3) dans une troisième sous-étape, à combiner sous bon mélange à une température de 0 à 60 ° C

(1.1.3.1) la suspension résultant de la sous-étape (1.1.1) avec

(1.1.3.2) un composé du phosphore de formule $P(O)(OR^3)_3$ ou $P(O)H(OR^3)_2$ - où $R^3$ est mis pour un groupement alkyle, aryle ou cycloalkyle ne renfermant pas plus de 12 atomes de carbone ou pour un atome d'hydrogène, étant spécifié que l'un au moins des R n'est pas mis pour un atome d'hydrogène - et avec

(1.1.3.3) le produit obtenu dans la sous-étape (1.1.2), étant spécifié que 0,1 à 5 parties en poids de chrome provenant du composé du chrome (1.1.2.2) et 0,5 à 10 parties en poids de phosphore provenant du composé du phosphore (1.1.3.2) sont utilisées pour 100 parties en poids de la matière de support (1.1.1.1), et

à maintenir le tout pendant 5 à 300 mn à la température mentionnée, et enfin

(1.1.4) dans une quatrième sous-étape, à évaporer la suspension obtenue dans la sous-étape (1.1.3), à une température ne dépassant pas 150 ° C - éventuellement sous pression réduite - jusqu'à siccité, puis,

(1.2) dans une seconde étape, en transformant le progéniteur de catalyseur obtenu dans la première étape (1.1) en le catalyseur sur support proprement dit, par un procédé consistant tout d'abord

(1.2.1) dans une première sous-étape, à maintenir le progéniteur de catalyseur obtenu dans la première étape (1.1) dans un courant d'azote anhydre pendant 60 à 500 mn à une température de 150 à 300 ° C, puis

(1.2.2) dans une deuxième sous-étape, à maintenir le produit intermédiaire obtenu dans la sous-étape (1.2.1) dans un courant de gaz anhydre contenant de l'oxygène en une concentration de plus de 10% en volume, pendant 10 à 1000 mn à une température de 300 à 900 ° C,

et enfin

(1.2.3) dans une troisième sous-étape, à maintenir le produit intermédiaire obtenu dans la saus-étape (1.2.2) dans un courant d'azote anhydre pendant 10 à 300 mn à une température de 50 à 400 ° C,

et en ce que

(2) on utilise, comme co-catalyseur, à la fois un alkyllithium de formule $LiR^4$ et un alkylbore de formule $BA^5{}_3$ - où $R^4$ et $R^5$ sont mis chacun pour un groupement alkyle en $C_1$ à $C_{12}$ -, le rapport molaire de l'alkyllithium à l'alkylbore étant compris entre 1:0,1 et 1:10,

étant spécifié que le rapport atomique du chrome contenu dans le catalyseur sur support (1) au lithium + bore dans le co-catalyseur (2) est supérieur à 1:100.

**2.** Catalyseur sur support (1) pour la catalyse de Phillips, se composant d'une matière de support qui est chargée de chrome présent sous forme oxydée, de phosphore présent sous forme oxydée et d'aluminium présent sous forme oxydée et qui a été obtenue

(1.1) en préparant, dans une première étape, un progéniteur de catalyseur (1.1) chargé des quantités désirées de chrome, de phosphore et d'aluminium, à partir

(1.1.a) d'une matière de support du type silicate, poreuse et finement divisée,

(1.1.b) d'un composé du chrome spécifique sélectionné,

(1.1.c) d'un composé du phosphore spécifique sélectionné et

(1.1d) d'un composé de l'aluminium spécifique sélectionné,

puis

(1.2) en maintenant, dans une seconde étape, le progéniteur de catalyseur (1.1) obtenu dans la première étape dans un courant de gaz anhydre contenant de l'oxygène en une concentration de plus de 10% en volume, pendant 10 à 1000 mn à une température de 300 à 900 ° C, et en le transformant ainsi en le catalyseur sur support (1) proprement dit,

caractérisé en ce que le catalyseur sur support a été obtenu

(1.1) en préparant, dans une première étape, un progéniteur de catalyseur par un procédé consistant tout d'abord,

(1.1.1) à préparer sous bon mélange, dans une première sous-étape, une suspension

(1.1.1.1) à partir d'une matière de support du type silicate, poreuse et finement divisée, qui a un

diamètre de particules de 1 à 400 µm, un volume de pores de 0,5 à 3 $cm^3$/g et une surface de 100 à 1000 $m^2$/g, et

(1.1.1.2) à partir d'un solvant organique inerte, étant spécifié que 150 à 5000 parties en poids du solvant (1.1.1.2) sont utilisées pour 100 parties en poids de la matière de support (1.1.1.1), puis

(1.1.2) dans une deuxième sous-étape, à combiner sous bon mélange à une température de 0 à 100 ° C,

(1.1.2.1) dans un solvant de la nature indiquée en (1.1.1.2),

(1.1.2.2) un composé du chrome de formule

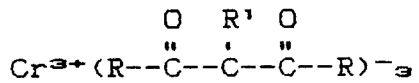

dans laquelle

- R est mis pour un groupement alkyle qui ne renferme pas plus de 12 atomes de carbone, et
- $R^1$ est mis pour un groupement alkyle qui ne renferme pas plus de 12 atomes de carbone ou pour un atome d'hydrogène,

(1.1.2.3) avec un composé de l'aluminium de formule $AlR^2_3$ - dans laquelle $R^2$ est mis pour un groupement alkyle qui ne renferme pas plus de 12 atomes de carbone-, étant spécifié que 0,5 à 10 parties en poids d'aluminium provenant du composé d'aluminium (1.1.2.3) et 5 à 500 parties en poids de solvant (1.1.2.1) sont utilisées pour 1 partie en poids de chrome provenant du composé du chrome (1.1.2.2),

et à maintenir le tout pendant 5 à 300 mn à la température mentionnée, puis

(1.1.3) dans une troisième sous-étape, à combiner sous bon mélange à une température de 0 à 60 ° C

(1.1.3.1) la suspension résultant de la sous-étape (1.1.1) avec

(1.1.3.2) un composé du phosphore de formule $P(O)(OR^3)_3$ ou $P(O)H(OR^3)_2$ - où $R^3$ est mis pour un groupement alkyle, aryle ou cycloalkyle ne renfermant pas plus de 12 atomes de carbone ou pour un atome d'hydrogène, étant spécifié que l'un au moins des R n'est pas mis pour un atome d'hydrogène - et avec

(1.1.3.3) le produit obtenu dans la sous-étape (1.1.2), étant spécifié que 0,1 à 5 parties en poids de chrome provenant du composé du chrome (1.1.2.2) et 0,5 à 10 parties en poids de phosphore provenant du composé du phosphore (1.1.3.2) sont utilisées pour 100 parties en poids de la matière de support (1.1.1.1), et

à maintenir le tout pendant 5 à 300 mn à la température mentionnée, et enfin

(1.1.4) dans une quatrième sous-étape, à évaporer la suspension obtenue dans la sous-étape (1.1.3), à une température ne dépassant pas 150 ° C - éventuellement sous pression réduite - jusqu'à siccité, puis,

(1.2) dans une seconde étape, en transformant le progéniteur de catalyseur obtenu dans la première étape (1.1) en le catalyseur sur support proprement dit, par un procédé consistant tout d'abord

(1.2.1) dans une première sous-étape, à maintenir le progéniteur de catalyseur obtenu dans la première étape (1.1) dans un courant d'azote anhydre pendant 60 à 500 mn à une température de 150 à 300 ° C, puis

(1.2.2) dans une deuxième sous-étape, à maintenir le produit intermédiaire obtenu dans la sous-étape (1.2.1) dans un courant de gaz anhydre contenant de l'oxygène en une concentration de plus de 10% en volume, pendant 10 à 1000 mn à une température de 300 à 900 ° C,

et enfin

(1.2.3) dans une troisième sous-étape, à maintenir le produit intermédiaire obtenu dans la sous-étape (1.2.2) dans un courant d'azote anhydre pendant 10 à 300 mn à une température de 50 à 400 ° C.